# EUROPEAN PATENT APPLICATION

(11) **EP 2 354 688 A2**
(43) Date of publication of application: **10.08.2011**
(21) Application number: 10175364.8
(22) Date of filing: 06.09.2010
(51) Int. Cl.: F24F 3/06

(54) **Hot water supply air conditioner**

(30) Priority: 09.02.2010 JP 2010026661
(71) Applicant: Mitsubishi Heavy Industries, Ltd., Tokyo 108-8215 (JP)
(72) Inventor: Omura, Minemasa, TOKYO 108-8215 (JP); Yamada, Hiroyuki, TOKYO 108-8215 (JP)
(74) Representative: Intès, Didier Gérard André

(57) **Abstract**

There is provided a novel hot water supply air conditioner in which a hot water supply system and a cooling and heating system share outdoor equipment. The hot water supply air conditioner (1a) includes a first refrigerant pipe (L1) through which a refrigerant discharged from a compressor (15) flows, and a second refrigerant pipe (L2) through which the refrigerant flows toward an electronic expansion valve (19). The first refrigerant pipe (L1) is divided into a first branch pipe (L11) through which the refrigerant flows toward an indoor heat exchanger (31), and a second branch pipe (L12) through which the refrigerant flows toward a water/refrigerant heat exchanger (21). A third branch pipe (L21) through which the refrigerant flows from the indoor heat exchanger (31) toward the electronic expansion valve (19) and a fourth branch pipe (L22) through which the refrigerant flows from the third heat exchanger toward the expansion valve merge into the second refrigerant pipe (L2).

## Description

### BACKGROUND OF INVENTION

### Field of the Intention

The present invention relates to a hot water supply air conditioner including a heat pump circuit.

### Description of the Related Art

A heat pump water heater has been known that uses heat of the atmosphere as natural energy. The heat pump water heater uses, as a heat source, a refrigerant that is heated to a high temperature in a condensation process of a heat pump circuit for circulating the refrigerant in a refrigeration cycle of compression, condensation, expansion, and vaporization. The heat pump water heater stores water heated by a heat exchange with the refrigerant therein or in a hot water storage tank, and supplies the heated water to a hot water using side (for example, Japanese Patent Laid-Open Nos. 2004-125226 and 2009-287896). The heat pump water heater achieves high coefficient of performance (COP).

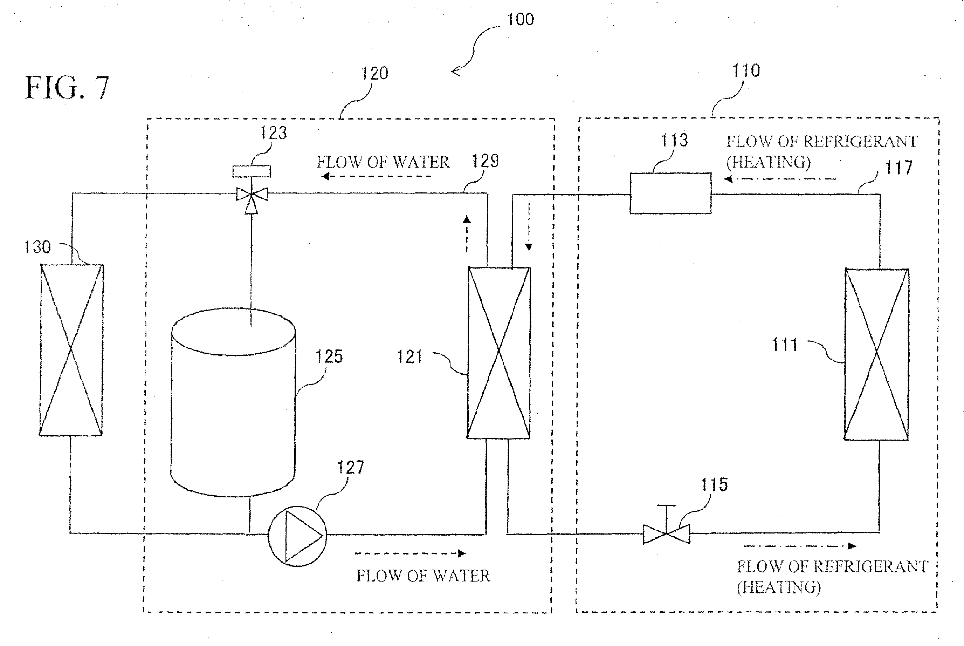

FIG. 7 an example of a circuit configuration of a conventional heat water heater 100.

The heat pump water heater 100 includes outdoor equipment 110, a hot water supply unit 120, and a hot-cold water heat exchanger 130.

In the outdoor equipment 110, an outdoor heat exchanger 111, a compressor 113, and an electronic expansion valve 115 are provided on a refrigerant circulation path 117 through which a refrigerant (for example, carbon dioxide) is circulated. The refrigerant circulation path 117 passes through a hot water supply unit 120 between the compressor 113 and the electronic expansion valve 115.

In the hot water supply unit 120, a water-refrigerant heat exchanger 121, a three-way valve 123, a hot water storage tank 125, and a water circulating pump 127 are provided on a water circulating path 129 through which water is circulated. The refrigerant circulation path 117 in the outdoor equipment 110 passes through the heat exchanger 121.

In the outdoor equipment 110, the refrigerant increased in temperature and pressure by the compressor 113 passes through the heat exchanger 121 via the refrigerant circulation path 117, and further passes through the electronic expansion valve 115 and the outdoor heat exchanger 111 flows into the compressor 113. Meanwhile, in the hot water supply unit 120, water discharged from the water circulating pump 127 is circulated so as pass through the heat exchanger 121 thy three-way valve 123 flow into the hot water storage tank 125. In this process, the water is heated by a heat exchange with the refrigerant increased in temperature and pressure by the heat exchanger 121, and then supplied to the hot water storage tank 125. The hot water storage tank 125 is connected to an unshown hot water using portion (such as a bath or a tap).

The heat pump water heater 100 comprises the hot-cold water heat exchanger 130 in parallel with the hot water storage tank 125, and the three-way valve 123 that is operated to select to supply hot water to the hot-cold water heat exchanger 130. The hot-cold water heat exchanger 130 is used for floor heating or the like, but when the hot water using portion requires supply of hot water, the three-way valve 123 is operated to supply hot water to the hot water storage tank 125.

In a building provided with the heat pump water heater 100 described above, an air conditioning apparatus for indoor cooling and heating is separately provided in most cases. The air conditioning apparatus is mainly of a type that performs a heat exchange between indoor air and a refrigerant for cooling and heating. In this case, the heat pump water heater 100 includes the outdoor equipment, and the air conditioning apparatus also includes outdoor equipment. Thus, when a water heater and an air conditioning apparatus are newly provided, devices that constitutes outdoor equipment overlap, which wastes cost installation space. Also, for example, when an air conditioning apparatus has been already provided, it is advantageous if a heat pump water heater can be provided using the outdoor equipment of the air conditioning apparatus. The present invention is achieved in view of the above, and has an object to provide a novel hot water supply air conditioner in which a hot water supply system and a cooling and heating system share an outdoor equipment.

### SUMMARY OF THE INVENTION

A hot water supply air conditioner of the present invention includes: a first heat exchanger that performs a heat exchange between outside air and a refrigerant; a compressor that compresses the refrigerant supplied via the first heat exchanger; a second heat exchanger to which the refrigerant compressed by the compressor is supplied and that performs a heat exchange between inside air and the refrigerant; a third heat exchanger to which the refrigerant compressed by the compressor is supplied and that performs a heat exchange between water for hot water supply and the refrigerant; and an expansion valve that the refrigerant supplied via one or both of the second heat exchanger and the third heat exchanger , them supplies the refrigerant toward the first heat exchanger. Further, the hot water supply air conditioner of the present invention includes a hot water storage tank that stores the water for hot water supply subjected to the heat exchange by the third heat exchanger, and the water for hot water supply heated by the heat exchange by the third heat exchanger; a water circulating pump that circulates the water for hot water supply between the third heat exchanger and the hot water storage tank; a first refrigerant pipe through which the refrigerant discharged from the compressor flows; and a second refrigerant pipe through which the refrigerant flows toward the expansion valve.

In the hot water supply air conditioner of the present invention, the first refrigerant pipe is divided into a first branch pipe through which the refrigerant flows toward the second heat exchanger and a second branch pipe through which the refrigerant flows toward the third heat exchanger, and a third branch pipe through which the refrigerant flows from the second heat exchanger toward the expansion valve and a fourth branch pipe through which the refrigerant flows from the third heat exchanger toward the expansion valve merge into the second refrigerant pipe.

In the hot water supply air conditioner of the present invention, the first to fourth branch pipes are provided as described above, and thus outdoor equipment including the first heat exchanger and the compressor can be shared by a hot water supply system including the third heat exchanger and the hot water storage tank and a cooling and heating system.

The hot water supply air conditioner of the present invention may include first valve means that selectively allows the refrigerant to flow into the first branch pipe or the second branch pipe. The first valve means can be achieved by providing an on-off valve in each of the first branch pipe and the second branch pipe, or providing a three-way valve in a branch portion from the first refrigerant pipe to the first branch pipe and the second branch pipe.

The hot water supply air conditioner of the present invention may include second valve means that adjusts an amount of the refrigerant flowing into the first branch pipe and the second branch pipe. The second valve means can be achieved by providing a flow amount adjusting valve in each of the first branch pipe and the second branch pipe.

The hot water supply air conditioner including the first valve can alternately perform hot water supply and heating, and the hot water supply air conditioner including the second valve cay simultaneously perform hot water supply and heating.

When the first valve means is provided, a temperature T of the water for hot water supply stored in hot water storage tank is detected, and the temperature T is compared with a predetermined reference temperature Ts. The first valve means preferably performs control so that the first valve means allows the refrigerant to flow into the first branch pipe but does not allow the refrigerant to flow into the second branch pipe when the temperature T is higher than the reference temperature Ts, and allows the refrigerant to flow into the second branch pipe but does not allow the refrigerant to flow into the first branch pipe when the temperature T is equal to or lower than the reference temperature Ts. This allows a constant temperature of the water for hot water supply in the hot water storage tank to be maintained.

Also, it may be allowed that reference temperatures Ts1 and Ts2 (Ts1 > Ts2) are set, and the first valve means performs hysteresis control so that the first valve means allows the refrigerant to flow into the first branch pipe but does not allow the refrigerant to flow into the second branch pipe when the temperature T is higher than the reference temperature Ts1, and allows the refrigerant to flow into the second branch pipe but does not allow the refrigerant to flow into the first branch pipe when the temperature T is equal two or lower than the reference temperature Ts2 .

In the hot water supply air conditioner of the present invention, components may be unitized to configure units such as an outdoor unit, a flow dividing unit, and an indoor unit.

Among such the units, the flow dividing unit may be configured by unitizing the first branch pipe and the second branch pipe, the third branch pipe and the fourth branch pipe, and the first valve means or the second valve means. A conventional cooling and heating system including an outdoor unit and an indoor unit can be changed into a hot water supply air conditioner by comprising such the flow dividing unit, a hot water storage tank and a water circulating pump.

In this case, the flow dividing unit may further include a third heat exchanger, a water circulating pump, and a hot water storage tank, thereby reducing on-site mounting work.

An outdoor unit may be configured so that an outdoor equipment functions also as a flow dividing unit. The outdoor unit is configured by unitizing the first heat exchanger, the compressor, the third heat exchanger and the expansion valve, the first branch pipe, the second branch pipe, the third branch pipe and the fourth branch pipe, and the first valve means or the second valve means.

According to the present invention, the hot water supply air conditioner with low cost smell is provided in which the hot water supply system and the cooling heating system the outdoor equipment. Also, according to the present invention, the components of the hot water supply air conditioner that share the outdoor equipment may be unitized to reduce burden of installation work.

### BRIEF DESCRIPTION OF THE DRAWINGS

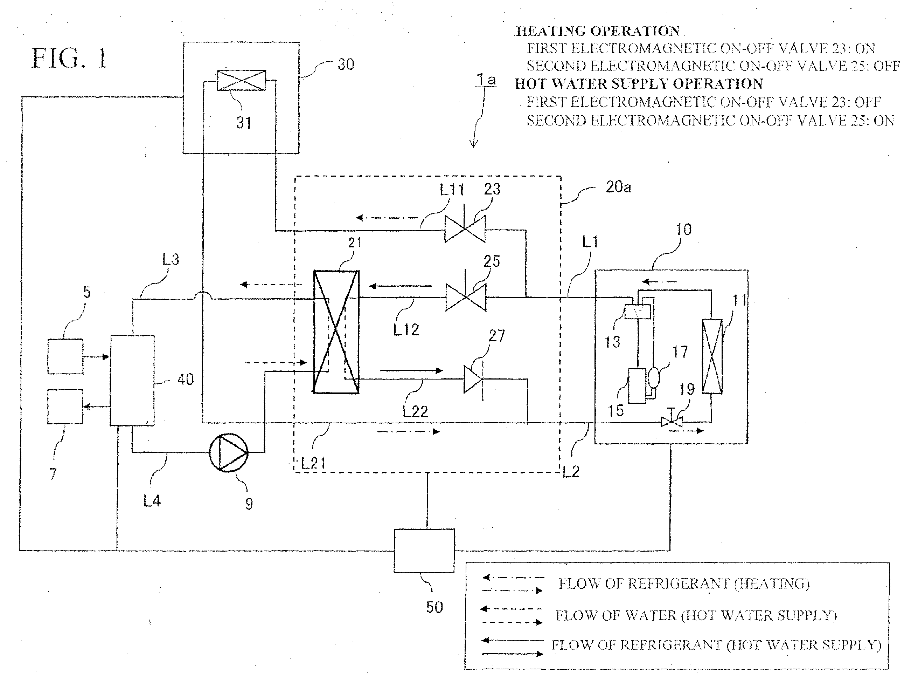

FIG. 1 is a block diagram showing a circuit configuration of a hot water supply air conditioner according to a first embodiment of the present invention;
FIG. 2 is a block diagram showing a circuit configuration of a hot water supply air conditioner according to a second embodiment of the present invention;
FIG. 3 is a block diagram showing a circuit configuration of a hot water supply air conditioner according to a third embodiment of the present invention;
FIG. 4 is a block diagram showing a circuit configuration of a hot water supply air conditioner according to a fourth embodiment of the present invention;
FIG. 5 is a block diagram showing a circuit configuration of a hot water supply air conditioner according to a fifth embodiment of the present invention;
FIG. 6 is a block diagram showing a circuit configuration of a hot water supply air conditioner according to a sixth embodiment of the present invention; and
FIG. 7 is a block diagram showing a circuit configuration of a conventional water heater.

### DETAILED DESCRIPTION OF THE PREFERRED EMBODIMENTS

Now, the present invention will be described in detail based on embodiments shown in the accompanying drawings.

### [First embodiment]

A hot water supply air conditioner 1a according to a first embodiment includes an outdoor unit 10, an indoor unit 30 connected to the outdoor unit 10 via a flow dividing unit 20a, and a hot water storage tank 40 connected to the outdoor unit 10 via the flow dividing unit 20a. The hot water supply air conditioner 1a constitutes a system in which the indoor unit 30 and the hot water storage tank 40 are connected in parallel to one outdoor unit 10 via the flow dividing unit 20a, the indoor unit 30 performs indoor cooling and heating, and hot water is supplied to a hot water using side 7 via the hot water storage tank 40.

The hot water supply air conditioner 1a feeds a refrigerant (for example, 407C) from an indoor heat exchanger (second heat exchanger) 31 as a copier (evaporator) to the outdoor unit 10 in cooling, and supplies the refrigerant fed from the outdoor unit 10 into the indoor heat exchanger 31 as a heater (condenser) in heating.

In this embodiment, "unit" means that constituent components of a unit are housed in a single casing.

### <Outdoor unit 10>

The outdoor unit 10 includes an outdoor heat exchanger (first heat exchanger) 11, a four-way switch valve 13, a compressor 15, an accumulator 17, and an electronic expansion valve 19. The outdoor unit 10 includes a first refrigerant pipe L1 and a second refrigerant pipe L2 through which the refrigerant flows.

The first refrigerant pipe L1 includes portions connecting between the outdoor heat exchanger 11 and the four-way switch valve 13, between the four-way switch valve 13 and the compressor 15, between the compressor 15 and the accumulator 17, and between the accumulator 17 and the four-way switch valve 13, and a portion extended from the four-way switch valve 13 toward the flow dividing unit 20a. The second refrigerant pipe L2 includes a portion connecting between the outdoor heat exchanger 11 and the electronic expansion valve 19, and a portion extended from the electronic expansion valve 19 toward the flow dividing unit 20a. The electronic expansion valve 19 may be provided outside the outdoor unit 10, for example, on a or the indoor unit 30 as long as a elative position where the electronic expansion valve 19 is located between the outdoor heat exchanger 11 and the indoor heat exchanger 31 is not changed.

In the hot water supply air conditioner 1a, in heating or hot water supply, the refrigerant supplied from the second refrigerant pipe L2 is fed to the electronic expansion valve 19 and wrung, and the refrigerant subjected to adiabatic expansion to enter a gas-liquid two-phase state is supplied to the outdoor heat exchanger 11. The refrigerant supplied to the outdoor heat exchanger 11 is cooled by latent heat of vaporization into a gas refrigerant, and then fed through the first refrigerant pipe L1 from the four-way switch valve 13 to the accumulator 17. The gas refrigerant fed to the accumulator 17 is further fed to the compressor 15 and compressed into a high-temperature and high-pressure gas refrigerant, and supplied via the four-way switch valve 13 through the first refrigerant pipe L1 to the flow dividing unit 20a.

The hot water supply air conditioner 1a feeds the refrigerant having through the indoor heat exchanger 31 in the indoor unit 30 through the first refrigerant pipe L1 to the four-way switch valve 13, supplies the refrigerant via the four-way switch valve 13 into the accumulator 17, and the refrigerant from the accumulator 17 into the compressor 15 in cooling. The refrigerant fed to the compressor 15 is compressed into a high-temperature and high-pressure gas refrigerant, and fed through the first refrigerant pipe L1 and via the four-way switch valve 13 to the outdoor heat exchanger 11. The gas refrigerant fed to the outdoor heat exchanger 11 is cooled by air and condensed into a liquid refrigerant, and then fed through the second refrigerant pipe L2 to the electronic expansion valve 19. The liquid refrigerant fed into the electronic expansion valve 19 is wrung, thus subjected to adiabatic expansion to be a refrigerant in a gas-liquid two-phase state, and fed through the second refrigerant pipe L2 into the indoor heat exchanger 31 in the indoor unit 30. The refrigerant then cools the indoor air by latent heat of vaporization and is thus vaporized.

The hot water supply air conditioner 1a can perform both cooling and heating operations. However, a refrigeration cycle for a heating operation with hot water supply will be described in this embodiment and the drawings, according to a feature of the present invention.

### <Flow dividing unit 20a>

The flow dividing unit 20a has a function of selectively supplying the refrigerant supplied from the outdoor unit 10 to the indoor unit 30 or the hot water storage tank 40. To achieve this function, the flow dividing unit 20a has a configuration described below.

In the flow dividing unit 20a, the first refrigerant pipe L1 is divided into a branch pipe (first branch pipe) L1 and another branch pipe (second branch pipe) L12, and the second refrigerant pipe L2 is divided into a branch pipe (third branch pipe) L21 and another branch pipe (fourth branch pipe) L22.

The branch pipe L11 and the branch pipe L21 are connected so that the refrigerant can pass through the indoor heat exchanger 31. The branch pipe L11 and the branch pipe L21 connect the outdoor unit 10 to the indoor unit 30, and thus the refrigerant is circulated through a channel formed by the first refrigerant pipe L1, the branch pipe L11, the branch pipe L21, and the second refrigerant pipe L2 in the outdoor unit 10 and the indoor unit 30.

The branch pipe L12 and the branch pipe L22 are connected so that the refrigerant can pass through a water/refrigerant heat exchanger (third heat exchanger) 21. The branch pipe L12 and the branch pipe L22 connect the outdoor unit 10 to the water/refrigerant heat exchanger 21, thugs the refrigerant is circulated through a channel formed by first refrigerant pipe L1, the branch pipe L12, the branch pipe L22, thy second refrigerant pipe L2 in the outdoor unit 10 and the water/refrigerant heat exchanger 21.

The flow dividing unit 20a comprises a first electromagnetic on-off valve (first valve means) 23 in the branch pipe L11 between the outdoor unit 10 and the indoor unit 30. When the first electromagnetic on-off valve 23 is opened (ON), the refrigerant flows between the outdoor unit 10 and the indoor unit 30, and when the first electromagnetic on-off valve 23 is closed (OFF), a flow of the refrigerant from the outdoor unit 10 toward the indoor unit 30 or a flow of the refrigerant from the indoor unit 30 toward the outdoor unit 10 is stopped.

The flow dividing unit 20a comprises a second electromagnetic on-off valve 25 (first valve means) in the branch pipe L12 between the outdoor unit 10 and the water/refrigerant heat exchanger 21. When the second electromagnetic on-off valve 25 is opened (ON), the refrigerant flows between the outdoor unit 10 and the water/refrigerant heat exchanger 21, and when the second electromagnetic on-off valve 25 is closed (OFF), a flow of the refrigerant from the outdoor unit 10 to the water/refrigerant heat exchanger 21 or a flow of the refrigerant from the water/refrigerant heat exchanger 21 to the outdoor unit 10 is stopped.

The branch pipe L22 comprises a check valve 27 the outdoor unit 10 and the water/refrigerant heat exchanger 21. The check valve 27 allows the refrigerant to flow from the water/refrigerant heat exchanger 21 to the outdoor unit 10, but stops the refrigerant from flowing from the outdoor unit 10 to the water/refrigerant heat exchanger 21. The check valve 27 is provided to stop the refrigerant from flowing into the water/refrigerant heat exchanger 21 when the hot water supply air conditioner 1a performs a cooling operation. An electromagnetic on-off valve may be provided instead of the check valve 27, and closed in the cooling operation.

The flow dividing unit 20a includes the water/refrigerant heat exchanger 21. The water/refrigerant heat exchanger 21 performs a heat exchange between the refrigerant supplied from the outdoor unit 10 and water supplied from the hot water storage tank 40 described later, heats the water to be hot water and returns the hot water to the hot water storage tank 40.

When performing the heating operation using the refrigeration cycle, the hot water supply air conditioner 1a turns on the first electromagnetic on-off valve 23 in the flow dividing unit 20a, and turns off the second electromagnetic on-off valve 25. performing a hot water supply operation, the hot water supply air conditioner 1a turns off the first electromagnetic on-off valve 23 in the flow dividing unit 20a, and turns on the second electromagnetic on-off valve 25.

### <Indoor unit 30>

The indoor unit 30 is provided inside a room of a house or an office and performs a heat exchange between the refrigerant flowing in the indoor heat exchanger 31 and indoor air to heat or cool the indoor air.

One end of the branch pipe L11 and one end of the branch pipe L21 are inserted into the indoor heat exchanger 31, and the two branch pipes L11 and L21 are connected so that the refrigerant can pass through the indoor heat exchanger 31. As described above, the electronic expansion valve 19 can be provided in the branch pipe L21 in the indoor unit 30.

### <Hot water storage tank 40>

The hot water supply air conditioner 1a includes the hot water storage tank 40.

The hot water storage tank 40 is connected to the water/refrigerant heat exchanger 21 by the water pipes L3 and L4. one end of the water pipe L3 and one end of the water pipe L4 inserted into the water/refrigerant heat exchanger 21, the two water pipes L3 and L4 are connected so that the water for hot supply can pass through the water/refrigerant heat exchanger 21. The other end of the water pipe L3 the other of the water pipe L4 inserted into the hot water storage tank 40. In the hot water supply operation, the water for hot water supply heated by the water/refrigerant heat exchanger 21 is supplied through the water pipe L3 to the hot water storage tank 40, and the water for hot water supply stored in the hot water storage tank 40 is supplied through the water pipe L4 to the water/refrigerant heat exchanger 21. The water circulating pump 9 provided in the water pipe L4 is driven, and thus the water for hot water supply stored in the hot water storage tank 40 is supplied through the water pipe L4 to the water/refrigerant heat exchanger 21.

Further, the water for hot water supply heated by the water/refrigerant heat exchanger 21 is circulated through a path of the water pipe L3, the hot water storage tank 40, the water pipe L4, the water circulating pump 9, and the water/refrigerant heat exchanger 21.

A water supply source 5 such as a water tap is connected to the hot water storage tank 40, and in the case of a shortage of the water for hot water supply in the hot water storage tank 40, water is supplied from the water supply source 5 into the hot water storage tank 40.

The hot water using side 7 is connected to the hot water tank 40, and when host water using side 7 provides an instruction to supply hot water, hot water stored in the hot water tank 40 is discharged toward the hot water using side 7. As the hot water using side 7, various applications are conceivable such as a shower of a bath room, a tap of a bath, or a hot-cold water heat exchanger 130 shown in FIG. 7.

### <Heating operation>

When performing the heating operation, the hot water supply air conditioner 1a turns on the first electromagnetic on-off valve 23 and turns off the second electromagnetic on-off valve 25. It is on the basis that the outdoor unit 10 and the indoor unit 30 are operated. Then, the refrigerant is circulated through the compressor 15, the four-way switch valve 13, the first electromagnetic on-off valve 23, the indoor unit 30 (indoor heat exchanger 31), the electronic expansion valve 19, the outdoor heat exchanger 11, the four-way switch valve 13, the accumulator 17, the compressor 15 ... in this order. The hot water supply air conditioner 1a heats the inside of a room by a heat exchange between a high-temperature and high-pressure gas refrigerant supplied from the compressor 15 to the indoor heat exchanger 31 and indoor air.

### <Hot water supply operations

When performing the hot water supply operation, the hot water supply air conditioner 1a turns off the first electromagnetic on-off valve 23 and turns on the second electromagnetic on-off valve 25. Then, the refrigerant is circulated through the compressor 15, the four-way switch valve 13, the second electromagnetic on-off valve 25, the water/refrigerant heat exchanger 21, the electronic expansion valve 9, the outdoor heat exchanger 11, the four-way switch valve 13, the accumulator 17, the compressor 15 ... in this order. At this time, the water circulating pump 9 is driven to circulate water in the hot water storage tank 40 and the water/refrigerant heat exchanger 21. Then, the circulated water is heated by a heat exchange with the high-temperature and high-pressure gas refrigerant by the water/refrigerant heat exchanger 21.

### <Switching between heating (or cooling) and hot water supply>

Switching between the heating operation and the hot water supply operation is preferably performed, for example, as described below.

The hot water supply air conditioner 1a includes a controller 50.

The controller 50 controls an operation of the outdoor unit 10 and operations of the flow dividing unit 20a and the indoor unit 10. The operation of the outdoor unit 10 includes switching of an operation condition of the compressor 15 and a channel of the four-way switch valve 13. The operation of the flow dividing unit 20a includes turning on and off the first electromagnetic on-off valve 23 and the second electromagnetic on-off valve 25.

The controller 50 detects a temperature T of the water in the hot water storage tank 40. The controller 50 compares the detected water temperature T (°C) with a reference temperature Ts (°C), and selects between a case of passing the refrigerant through the water/refrigerant heat exchanger 21 and a case of passing the refrigerant through the indoor unit 30 based on the result of the comparison.

Specifically, when the controller 50 detects that the water temperature T (°C) of the hot water storage tank 40 is equal to or lower than the reference temperature Ts (°C), the controller 50 drives the water circulating pump 9 to circulate the water between the hot water storage tank 40 and the water/refrigerant heat exchanger 21. The controller 50 instructs the flow dividing unit 20a to turn off the first electromagnetic on-off valve 23 and turn on the second electromagnetic on-off valve 25. Specifically, the controller 50 allows the refrigerant to flow into the branch pipe L12 but does not allow the refrigerant to flow into the branch pipe L11. The outdoor unit 10 is operated so that the refrigerant flows in directions of dash-single-dot line arrows. Then, the hot water supply operation is performed in which the water/refrigerant heat exchanger 21 performs the heat exchange between the refrigerant and the water to heat the circulated water.

When the detected water temperature T(°C) is higher than the reference temperature Tis (°C), the controller 50 stops the water circulating pump 9 to stop the circulation of the water between the hot water storage tank 40 and the water/refrigerant heat exchanger 21. The controller 50 instructs the flow dividing unit 20a to turn on the first electromagnetic on-off valve 23 and turn off the second electromagnetic on-off valve 25. Specifically, the controller 50 allows the refrigerant to flow into the branch pipe L11 but does not allow the refrigerant to flow into the branch pipe L12. Then, the refrigerant is supplied to the indoor unit 30, and the heating operation is performed. It goes without saying that the channel of the four-way switch valve 13 can be switched to perform the cooling operation at this time.

Two reference temperatures Ts1 (°C) and Ts2 (°C) may be set so that the case of passing the refrigerant through the water/refrigerant heat exchanger 21 and the case of passing the refrigerant through the indoor unit 30 can be selected. For example, control may be performed so that with the reference temperatures Ts1 = 65°C and Ts2 = 55°C (Ts1 > Ts2), the water temperature T (°C) is equal to or lower than the reference temperature Ts2 (°C), the flow of the refrigerant into the branch pipe L12 is allowed but the flow of the refrigerant into the branch pipe L11 is not allowed, and when the water temperature T (°C) is higher than the reference temperature Ts1, the flow of the refrigerant into the branch pipe L11 is allowed but the flow of the refrigerant into the branch pipe L12 is not allowed. This allows hysteresis control.

As described above, the hot water supply air conditioner 1a according to the first embodiment uses the air heat exchange indoor unit 30 generally used in Japan, and the flow dividing unit 20a and the hot water storage tank 40 are further provided, thereby allowing cooling and heating operations and a hot water supply operation with one outdoor unit 10. Thus, in a renewal of an air conditioner, a hot water supply air conditioner that can also perform a hot water supply operation can be provided.

In the above-described embodiment, the controller 50 detects the water temperature in the hot water storage tank 40 to switch between the hot water supply operation and the heating/cooling operation. However, the present invention is not limited to this, and for example, it may be allowed that a time period a large amount of hot water is is grasped, and a hot water supply operation is performed the time period.

### [Second embodiment ]

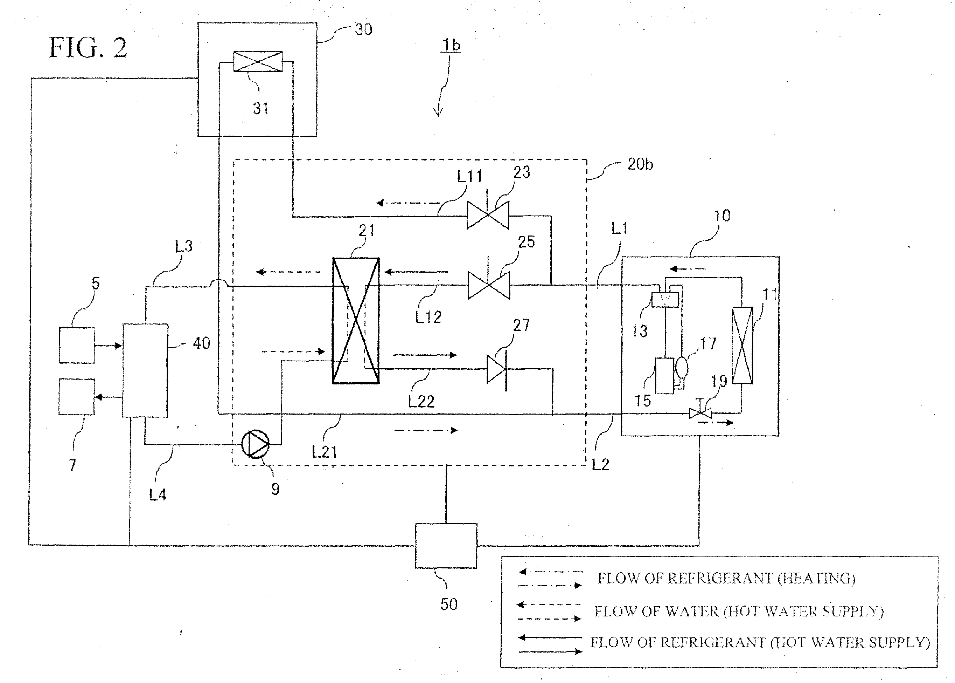

A hot water supply air conditioner 1b according to a second embodiment includes the same basic components as those in the first embodiment, but has a feature in that a water circulating pump 9 is provided inside a flow dividing unit 20b as shown in FIG. 2.

This can save trouble for a builder to separately prepare and install the water circulating pump 9.

### [Third embodiment]

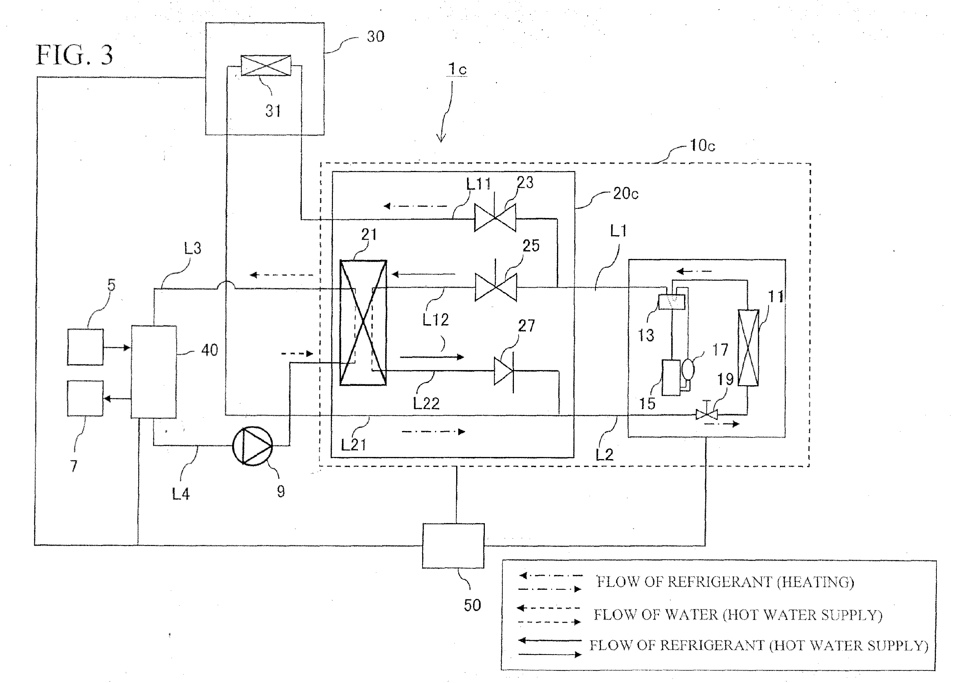

A hot water supply air conditioner 1c according to a third embodiment includes the same basic components as those in the first embodiment, but has a feature in that a flow dividing unit 20c is provided in an outdoor unit 10c as shown in FIG. 3.

This can save trouble for a builder to separately prepare and install the flow dividing unit 20c. In the example in FIG. 3, the water circulating pump 9 is provided outside the flow dividing unit 20c, but the water circulating pump 9 may be provided inside the flow dividing unit 20c as in the second embodiment.

### [Fourth embodiment]

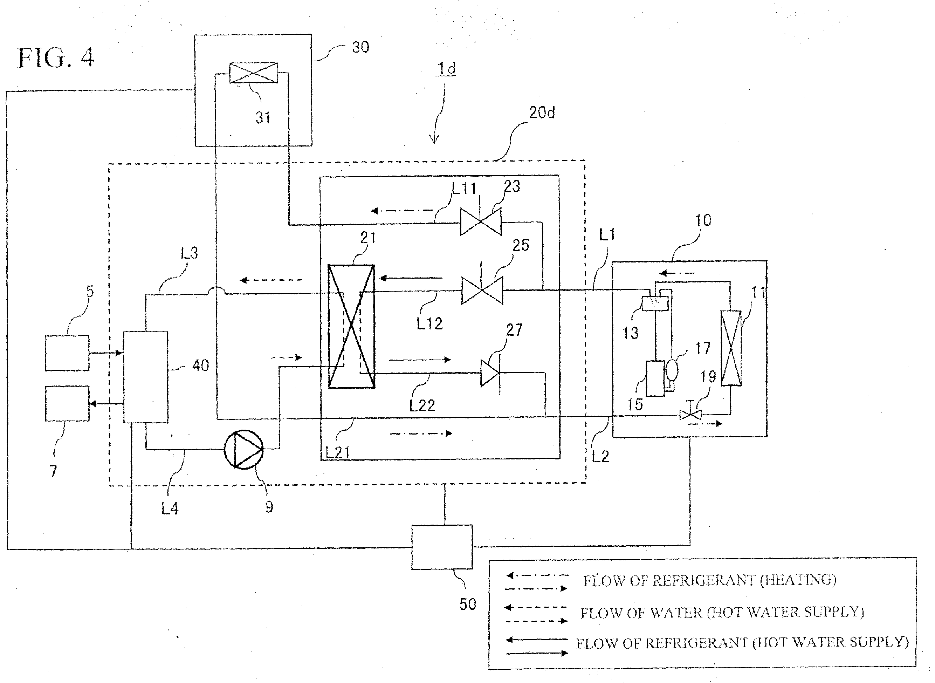

A hot water supply air conditioner 1d according to a fourth embodiment includes the basic components as those in the first embodiment, but has a feature in that a hot water storage tank 40 is housed in a flow dividing unit 20d as in FIG. 4.

This can save trouble for a builder to separately prepare and install the flow dividing unit 20d and the hot water storage tank 40.

### [Fifth embodiment]

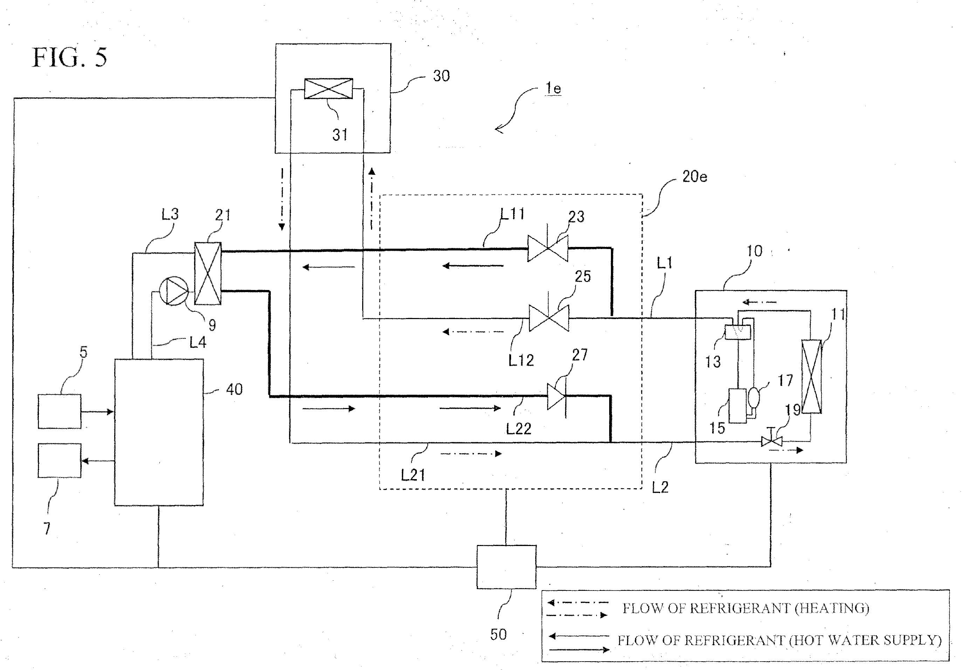

A hot water supply air conditioner 1e according to a fifth embodiment includes the same basic components as those in the first embodiment, but has a feature in that a flow dividing unit 20e is constituted without a water/refrigerant heat exchanger 21 and a water circulating pump 9 as shown in FIG. 5.

Thus, the flow dividing unit 20e may be constituted by minimum components such as valves and pipes, and existing components may be used as other components such as an outdoor unit 10 and an indoor unit 30.

### [Sixth embodiment]

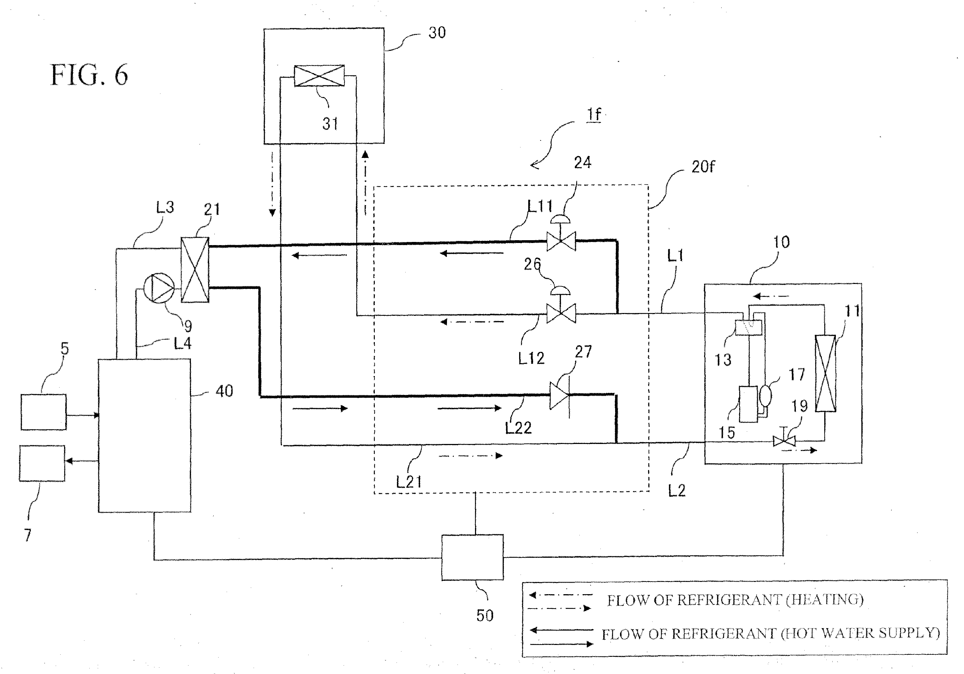

A hot water supply air conditioner 1f according to a sixth embodiment includes the same basic components as those in the fifth embodiment, but has a feature in that a valve provided in a branch pipe L11 is a first flow amount adjusting valve 24 (second valve means) and a valve provided in a branch pipe L12 is a second flow amount adjusting valve 26 (second valve means) as shown in FIG. 6.

Thus, or opening of the first flow amount adjusting valve 24 provided in the branch pipe L11 and the second flow amount adjusting valve 26 provided in the branch pipe L12 can be adjusted to supply a refrigerant to each of an indoor heat exchanger 31 in an indoor unit 30 and a water/refrigerant heat exchanger 21. Thus, the hot water supply air conditioner If can simultaneously perform heating and hot water supply during a heating operation, thereby maintaining comfortability inside a room even during hot water supply.

Further, the configurations described in the embodiments may be chosen or combined or changed to other configurations without departing from the gist of the present invention.

## Claims

1. A hot water supply air conditioner (1a, 1b, 1c, 1d, 1e, 1f) **characterized in that** it comprises:
a first heat exchanger (11) that performs a heat exchange between outside air and a refrigerant;
a compressor (15) that compresses the refrigerant supplied via the first heat exchanger (11);
a second heat exchanger (31) to which the refrigerant compressed by the compressor (15) is supplied and that performs a heat exchange between inside air and the refrigerant;
a third heat exchanger (21) to which the refrigerant compressed by the compressor (15) is supplied and that performs a heat exchange between water for hot water supply and the refrigerant;
an expansion valve (19) that expands the refrigerant supplied via one or both of the second heat exchanger (31) and the third heat exchanger (21), and then supplies the refrigerant toward the first heat exchanger (11);
a hot water storage tank (40) that stores the water for hot water supply subjected to the heat exchange by the third heat exchanger (21), and the water for hot water supply heated by the heat exchange by the third heat exchanger (21);
a circulating pump (9)> that circulates the water for hot water supply between the third heat exchanger (21) and host water storage tank (40);
a first refrigerant pipe (L1) through which the refrigerant discharged from the compressor (15) flows; and
a second refrigerant pipe (L2) through which the refrigerant flows toward the expansion valve (19),
wherein the first refrigerant pipe (L1) is divided into a first branch pipe (L11) through which the refrigerant flows toward the second heat exchanger (31) and a second branch pipe (L12) through which the refrigerant flows toward the third heat exchanger (21), and
a third branch pipe (L21) through which the refrigerant flows from the second heat exchanger (31) toward the expansion valve (19) and a fourth branch pipe (L22) through which the refrigerant flows from the third heat exchanger (21) toward the expansion valve (19) merge into the second refrigerant pipe (L2).

2. The hot water supply air conditioner (1a, 1b, 1c, 1d, 1e, 1f) according to claim 1, **characterized in that** it further comprises:
first valve means (23, 25) that selectively allow the refrigerant to flow into the first branch pipe (L11) or the branch pipe (L12).

3. The hot water supply air conditioner (1a, 1b, 1c, 1d, 1e, 1f) according to claim 1, **characterized in that** it further comprises:
second valve (24, 26) means that adjusts an amount of the refrigerant flowing into the first branch pipe (L11) and the second branch pipe (L12).

4. The hot water supply air conditioner (1a 1b, 1c, 1d, 1e, 1f) according to claim 2, **characterized in that** it comprises a temperature T of the water for hot water supply stored in the hot water storage tank (40) is detected,
the temperature T is compared with a predetermined reference temperature Ts,
the first valve means (23, 25) allows the refrigerant to flow into the first branch pipe (L11) but does not allow the refrigerant to flow into the second branch pipe (L12) when the temperature T is higher than the reference temperature Ts, and
allows the refrigerant to flow into the second branch pipe (L12) but does not allow the refrigerant to flow into the first branch pipe (L11) when the temperature T is equal to or lower than the reference temperature Ts.

5. The hot water supply air conditioner (1a, 1b, 1c, 1d, 1e, 1f) according to claim 2, **characterized in that** a temperature T of the water for hot water supply stored in the hot water storage tank (40) is detected,
the temperature T is compared with predetermined reference temperatures Ts1 and Ts2 (Ts1 > Ts2),
the first valve means (23, 25) allows the refrigerant to flow into the first branch pipe (L11) but does not allow the refrigerant to flow into the second branch pipe (L12) when the temperature T is higher than the reference temperature Ts1, and
allows the refrigerant to flow into the second branch pipe (L12) but does not allow the refrigerant to flow into the first branch pipe (L11) when the temperature T is equal to or lower than the reference temperature Ts2.

6. A flow dividing unit (20a, 20b, 20c, 20d, 20e) in a hot water supply air conditioner that constitutes a hot water supply air conditioner (1a, 1b, 1c, 1d, 1e, 1f) according to any one of claims 1, 2, 4 and 5,
**characterized in that** the first branch pipe (L11), the second branch pipe (L12), the third branch pipe (L21), the fourth branch pipe (L22), and the first valve means (23, 25) are unitized.

7. A flow dividing unit (20a, 20b, 20c, 20d, 20e) in a hot water supply air conditioner that constitutes a hot water supply air conditioner (1a, 1b, 1a, 1d, 1e, 1f) according to claim 3,
**characterized in that** a first branch pipe (L11), a second branch pipe (L12), a third branch pipe (L21), a fourth branch pipe (L22), and second valve means (24, 26) are unitized.

8. The flow dividing unit (20a, 20b, 20c, 20d, 20e) in a hot water supply air conditioner according to claim 6 or 7, **characterized in that** it further comprises a third heat exchanger (21).

9. The flow dividing unit (20a, 20b, 20c, 20d, 20e) in a hot water supply air conditioner (1a 1b, 1c, 1d, 1e, 1f) according to any one of claims 6 to 8, **characterized in that** it further comprises a water circulating pump (9).

10. The flow dividing unit (20a, 20b, 20c, 20d, 20e) in a hot water supply air conditioner (1a 1b, 1c, 1d, 1e, 1f) according to any one of claims 6 to 9, **characterized in that** it further comprises a hot water storage tank (40).

11. An outdoor unit in a hot water supply air conditioner that constitutes a hot water supply air conditioner (1a, 1b, 1c, 1d, 1e, 1f) according to any one of claims 1, 2, 4 and 5,
**characterized in that** a first heat exchanger (11), a compressor (15), a third heat exchanger (21), an expansion valve (19), a first branch pipe (L11), a second branch pipe (L12), a third branch pipe (L21), a fourth branch pipe (L22), and first valve means (23, 25) are unitized.
